# EUROPEAN PATENT SPECIFICATION

(11) **EP 4 404 337 B1**
(45) Date of publication and mention of the grant of the patent: **25.11.2026**
(21) Application number: 23864152.6
(22) Date of filing: 24.04.2023
(51) Int. Cl.: H01M 10/6554, H01M 10/647, H01M 10/613, H01M 10/623, H01M 10/651, H01M 6/50

(54) **BATTERY DEVICE**
BATTERIEVORRICHTUNG
DISPOSITIF DE BATTERIE

(30) Priority: 25.11.2022 KR 20220160261
(43) Date of publication of application: 24.07.2024
(73) Proprietor: LG ENERGY SOLUTION, LTD., Seoul 07335 (KR)
(72) Inventor: CHENG, Hao Wen, 11494 Taipei City (TW)
(74) Representative: Goddar, Heinz J.
(86) International application number: PCT/KR2023/005563
(87) International publication number: WO 2024/111765

(56) References cited:
- KR-A- 20190 051 300
- KR-A- 20200 081 332
- KR-A- 20210 064 934
- KR-A- 20220 003 086
- KR-A- 20220 107 551
- US-A1- 2021 351 456

## Description

### TECHNICAL FIELD

The present disclosure relates to an electronic component, more particularly, to a battery device. The present application claims priority to Korean Patent Application No. 10-2022-0160261 filed on November 25, 2022 in the Republic of Korea.

### BACKGROUND ART

Portable electronic products (e.g., notebook computers) may provide the required power by including a battery device. However, battery devices generate heat during operation, which affects the efficacy of the electronic products. Therefore, an effective method for improving the heat dissipation efficiency of battery devices is emerging as a challenge to be solved.

The prior art relevant to the present application is given by US 2021/351456 A1.

### DISCLOSURE

### Technical Problem

The present disclosure is directed to providing a battery device with excellent heat dissipation effect.

### Technical Solution

The present invention is defined according to the subject matter of the appended independent claim. Particular embodiments are given by the additional features of the appended dependent claims. In one aspect of the present disclosure, there is provided a battery device, comprising: one stacked battery unit having two surfaces facing each other; two support frames provided on the surfaces of the stacked battery unit, respectively, to partially expose the surfaces; two thermally conductive adhesive layers respectively provided on the surfaces of the stacked battery unit exposed by the support frames; and two thermally conductive plates respectively provided on the support frames and respectively fixed on the stacked battery unit through the thermally conductive adhesive layers.

The stacked battery unit includes a first battery unit; a second battery unit; and a support layer provided between the first battery unit and the second battery unit.

In an embodiment of the present disclosure, the first battery unit and the second battery unit may include a soft pack battery cell, respectively.

In an embodiment of the present disclosure, the material of the support layer may include plastic.

In an embodiment of the present disclosure, the material of each support frame may include plastic.

In an embodiment of the present disclosure, each of the thermally conductive adhesive layers may have a thickness in the range of 0.125 mm to 0.5 mm.

In an embodiment of the present disclosure, the thermal conductivity of each thermally conductive plate may be greater than the thermal conductivity of each thermally conductive adhesive layer.

In an embodiment of the present disclosure, the material of each thermally conductive plate may include stainless steel.

In an embodiment of the present disclosure, each of the thermally conductive plates may have a thickness in the range of 0.05 mm to 0.2 mm.

In an embodiment of the present disclosure, the battery device may further comprise two printing layers respectively provided on the thermally conductive plates to cover the thermally conductive plates.

### Advantageous Effects

As described above, in the battery device according to the present disclosure, the thermally conductive plate is fixed on the stacked battery unit through a thermally conductive adhesive layer, which corresponds to the surface of the stacked battery unit to increase the heat dissipation area of the stacked battery unit and is advantageous for heat dissipation of the stacked battery unit. In addition, the stacked battery unit provides a good thermal conduction path through the thermally conductive adhesive layer and the thermally conductive plate, so that the temperature of the stacked battery unit is balanced and has desirable thermal stability. Therefore, the battery device according to the present disclosure has a desirable heat dissipation effect and allows the stacked battery unit to have desirable thermal stability.

### DESCRIPTION OF DRAWINGS

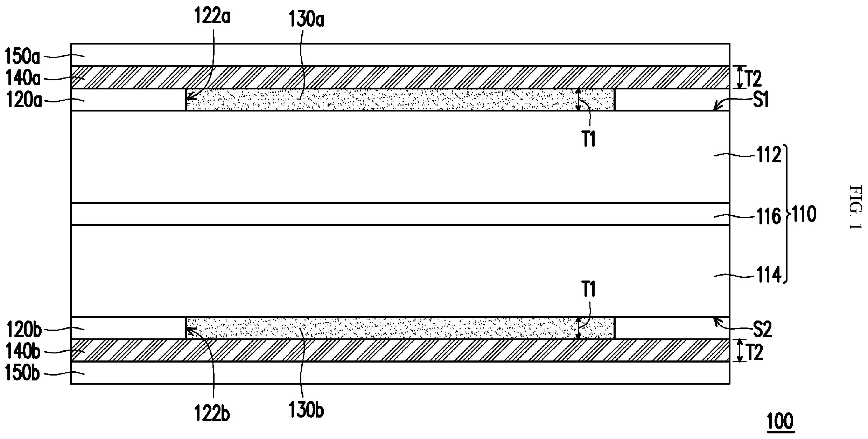

FIG. 1 is a diagram showing a battery device according to an embodiment of the present disclosure.

### BEST MODE

In order to understand the features and advantages of the present disclosure more clearly and easily, a detailed description is provided in conjunction with the drawings through the following embodiment.

The present disclosure can be understood by referring to the following detailed description and the accompanying drawings, and it should be noted that for easy understanding of the present disclosure and conciseness of the drawings, the structures in the drawings are not drawn to scale. In addition, the quantity and size of each component in the drawing is only an example and does not limit the present disclosure.

FIG. 1 is a diagram showing a battery device according to an embodiment of the present disclosure. According to FIG. 1, in this embodiment, a battery device 100 includes one stacked battery unit 110, two support frames 120a and 120b, two thermally conductive adhesive layers 130a and 130b, and two thermally conductive plates 140a and 140b. The stacked battery unit 110 has two surfaces S1 and S2 facing each other. The support frames 120a and 120b are located on the surfaces S1 and S2 of the stacked battery unit 110, respectively, and partially expose the surfaces S1 and S2, respectively. The thermally conductive adhesive layers 130a and 130b are respectively provided on the surfaces S1 and S2 of the stacked battery unit 110 exposed by the support frames 120a and 120b. The thermally conductive plates 140a and 140b are provided on the support frames 120a and 120b, respectively, and are fixed on the stacked battery unit 110 through the thermally conductive adhesive layers 130a and 130b, respectively.

In detail, the battery device 100 according to this embodiment is a battery device used in a notebook computer or other electronic products, but is not limited thereto. The stacked battery unit 110 includes a first battery unit 112, a second battery unit 114, and a support layer 116, among which the support layer 116 is provided between the first battery unit 112 and the second battery unit 114. In the first embodiment, each of the first battery unit 112 and the second battery unit 114 may be a soft pack battery cell. In one embodiment, the material of the support layer 116 may be plastic, for example, polycarbonate (PC), but is not limited thereto. In one embodiment, the thickness of the support layer 116 may be 0.2 mm, but is not limited thereto.

Referring to FIG. 1 again, in this embodiment, the support frames 120a and 120b include openings 122a and 122b, respectively, and the material of each of the support frames 120a and 120b is plastic, such as polycarbonate, but is not limited thereto. In one embodiment, the thickness of each of the support frames 120a and 120b is 0.2 mm, but is not limited thereto.

In addition, the thermally conductive adhesive layers 130a and 130b in this embodiment are provided in the openings 122a and 122b of the support frames 120a and 120b, respectively, and directly contact the surfaces S1 and S2 of the stacked battery unit 110 exposed by the support frames 120a and 120b. In one embodiment, the thickness T1 of each of the thermally conductive adhesive layers 130a and 130b is in the range of, for example, 0.125 mm to 0.5 mm. In one embodiment, the thermally conductive adhesive layers 130a and 130b may be, for example, 3M adhesives having a thermal conductivity of 0.6 W/mK, such as 3M^{™}8805 (0.125 mm thickness), 3M^{™}8810 (0.25 mm thickness), 3M^{™}8815 (0.375 mm thickness), or 3M^{™}8820 (0.5mm thickness) module, but is not limited thereto. In one embodiment, the thermally conductive adhesive layers 130a and 130b fill the openings 122a and 122b of the support frames 120a and 120b and are cut to coincide with the openings 122a and 122b. In one embodiment, the thermally conductive adhesive layers 130a and 130b may fill the openings 122a and 122b of the support frames 120a and 120b and extend onto the support frames 120a and 120b.

In addition, the thermally conductive plates 140a and 140b according to this embodiment are specifically flat, and the thermal conductivity of each of the thermally conductive plates 140a and 140b is greater than the thermal conductivity of each of the thermally conductive adhesive layers 130a and 130b. In one embodiment, the material of each of the thermally conductive plates 140a and 140b may be stainless steel, for example, stainless steel 304 or stainless steel 316, and the thermal conductivity of stainless steel 304 and stainless steel 316 is 16.3 W/m°C, respectively. The thickness T2 of each of the thermally conductive plates 140a and 140b is in the range of 0.05 mm to 0.2 mm. When the thermally conductive plates 140a and 140b are made of stainless steel 304, the thickness T2 is preferably 0.1 mm, and when the thermally conductive plates 140a and 140b are made of stainless steel 316, the thickness T2 is preferably 0.15 mm.

In addition, the battery device 100 according to this embodiment also includes two printing layers 150a and 150b, and the printing layers 150a and 150b are provided on the thermally conductive plates 140a and 140b, respectively, to cover the thermally conductive plates 140a and 140b. The printing layers 150a and 150b may include text or image, and display information such as a model of the battery device 100. Accordingly, the printing layers 150a and 150b may also be referred to as label layers. In one embodiment, the thickness of the printing layers 150a and 150b is 0.1 mm, for example.

As described above, in the battery device according to the present disclosure, the thermally conductive plate is fixed on the stacked battery unit through a thermally conductive adhesive layer, which corresponds to the surface of the stacked battery unit and increases the heat dissipation area of the stacked battery unit. Therefore, it is advantageous for heat dissipation of the stacked battery unit. In addition, the stacked battery unit also provides a good thermal conduction path through the thermally conductive adhesive layer and the thermally conductive plate so that the temperature of the stacked battery unit is balanced to have desirable thermal stability. Therefore, the battery device according to the present disclosure has a good heat dissipation effect (temperature drop by at least 3°C) and allows the stacked battery unit to have desirable thermal stability.

### Reference Signs

100: battery device
110: stacked battery unit
112: first battery unit
114: second battery unit
116: support layer
120a, 120b: support frame
122a, 122b: opening
130a, 130b: thermally conductive adhesive layer
140a, 140b: thermally conductive plate
150a, 150b: printing layer
S1, S2: surface
T1, T2: thickness

## Claims

1. A battery device (100), comprising:
one stacked battery unit (110) having two surfaces (S1, S2) opposite to each other;
two support frames (120a, 120b) provided on the surfaces (S1, S2) of the stacked battery unit (110), respectively, to partially expose the surfaces (S1, S2);
two thermally conductive adhesive layers (130a, 130b) respectively provided on the surfaces (S1, S2) of the stacked battery unit (110) exposed by the support frames (120a, 120b); and
two thermally conductive plates (140a, 140b) respectively provided on the support frames (120a, 120b) and respectively fixed on the stacked battery unit (110) through the thermally conductive adhesive layers (130a, 130b),
wherein the stacked battery unit (110) includes:
a first battery unit (112);
a second battery unit (114); and
a support layer (116) provided between the first battery unit (112) and the second battery unit (114).

2. The battery device (100) according to claim 1,
wherein the first battery unit (112) and the second battery unit (114) include a soft pack battery cell, respectively.

3. The battery device (100) according to claim 1,
wherein the material of the support layer (116) includes plastic.

4. The battery device (100) according to claim 1,
wherein the material of each support frame (120a, 120b) includes plastic.

5. The battery device (100) according to claim 1,
wherein each of the thermally conductive adhesive layers (130a, 130b) has a thickness (T1) in the range of 0.125 mm to 0.5 mm.

6. The battery device (100) according to claim 1,
wherein the thermal conductivity of each thermally conductive plate (140a, 140b) is greater than the thermal conductivity of each thermally conductive adhesive layer (130a, 130b).

7. The battery device (100) according to claim 1,
wherein the material of each thermally conductive plate (140a, 140b) includes stainless steel.

8. The battery device (100) according to claim 1,
wherein each of the thermally conductive plates (140a, 140b) has a thickness (T2) in the range of 0.05 mm to 0.2 mm.

9. The battery device (100) according to claim 1, further comprising:
two printing layers respectively provided on the thermally conductive plates (140a, 140b) to cover the thermally conductive plates (140a, 140b).

## Patentansprüche

1. Batterievorrichtung (100) aufweisend:
eine gestapelte Batterieeinheit (110) mit zwei einander gegenüberliegenden Oberflächen (S1, S2);
zwei Stützrahmen (120a, 120b), die jeweils auf den Oberflächen (S1, S2) der gestapelten Batterieeinheit (110) gebildet sind, um die Oberflächen (S1, S2) teilweise freizulegen;
zwei wärmeleitende Klebeschichten (130a, 130b), die auf einer jeweiligen Oberfläche (S1, S2) der gestapelten Batterieeinheit (110) gebildet sind, die durch die Stützrahmen (120a, 120b) freigelegt sind; und
zwei wärmeleitende Platten (140a, 140b), die auf einem jeweiligen der Stützrahmen (120a, 120b) gebildet sind und jeweils durch die wärmeleitenden Klebeschichten (130a, 130b) an der gestapelten Batterieeinheit (110) befestigt sind,
wobei die gestapelte Batterieeinheit (110) aufweist:
eine erste Batterieeinheit (112);
eine zweite Batterieeinheit (114); und
eine Stützschicht (116), die zwischen der ersten Batterieeinheit (112) und der zweiten Batterieeinheit (114) gebildet ist.

2. Batterievorrichtung (100) nach Anspruch 1,
wobei die erste Batterieeinheit (112) und die zweite Batterieeinheit (114) jeweils eine Soft-Pack-Batteriezelle aufweisen.

3. Batterievorrichtung (100) nach Anspruch 1,
wobei das Material der Stützschicht (116) Kunststoff enthält.

4. Batterievorrichtung (100) nach Anspruch 1,
wobei das Material jedes Stützrahmens (120a, 120b) Kunststoff enthält.

5. Batterievorrichtung (100) nach Anspruch 1,
wobei jede der wärmeleitenden Klebeschichten (130a, 130b) eine Dicke (T1) im Bereich von 0,125 mm bis 0,5 mm aufweist.

6. Batterievorrichtung (100) nach Anspruch 1,
wobei die Wärmeleitfähigkeit jeder wärmeleitenden Platte (140a, 140b) größer ist als die Wärmeleitfähigkeit jeder wärmeleitenden Klebeschicht (130a, 130b).

7. Batterievorrichtung (100) nach Anspruch 1,
wobei das Material jeder wärmeleitenden Platte (140a, 140b) rostfreien Stahl enthält.

8. Batterievorrichtung (100) nach Anspruch 1,
wobei jede der wärmeleitenden Platten (140a, 140b) eine Dicke (T2) im Bereich von 0,05 mm bis 0,2 mm aufweist.

9. Batterievorrichtung (100) nach Anspruch 1, ferner aufweisend:
zwei Druckschichten, die jeweils auf den wärmeleitenden Platten (140a, 140b) gebildet sind, um die wärmeleitenden Platten (140a, 140b) abzudecken.

## Revendications

1. Dispositif de batterie (100) comprenant :
une unité de batterie empilée (110) possédant deux surfaces (S1, S2) situées l'une en face de l'autre ;
deux bâtis de support (120a, 120b) agencés sur les surfaces (S1, S2) de l'unité de batterie empilée (110), respectivement, pour exposer partiellement les surfaces (S1, S2) ;
deux couches adhésives thermo-conductrices (130a, 130b) agencées respectivement sur les surfaces (S1, S2) de l'unité de batterie empilée (110) exposée par les bâtis de support (120a, 120b) ;
et
deux plaques thermo-conductrices (140a, 140b) agencées respectivement sur les bâtis de support (120a, 120b) et fixées respectivement sur l'unité de batterie empilée (110) à travers les couches adhésives thermo-conductrices (130a, 130b),
l'unité de batterie empilée (110) comprenant :
une première unité de batterie (112) ;
une deuxième unité de batterie (114) ; et
une couche de support (116) agencée entre la première unité de batterie (112) et la deuxième unité de batterie (114).

2. Dispositif de batterie (100) selon la revendication 1,
la première unité de batterie (112) et la deuxième unité de batterie (114) comprenant une cellule de batterie Soft Pack, respectivement.

3. Dispositif de batterie (100) selon la revendication 1,
le matériau de la couche de support (116) comprenant de la matière plastique.

4. Dispositif de batterie (100) selon la revendication 1,
le matériau de chaque bâti de support (120a, 120b) comprenant de la matière plastique.

5. Dispositif de batterie (100) selon la revendication 1,
l'épaisseur (T1) de chacune des couches adhésives thermo-conductrices (130a, 130b) étant comprise dans la plage allant de 0,125 mm à 0,5 mm.

6. Dispositif de batterie (100) selon la revendication 1,
la thermo-conductivité de chaque plaque thermo-conductrice (140a, 140b) étant supérieure à la thermo-conductivité de chaque couche adhésive thermo-conductrice (130a, 130b).

7. Dispositif de batterie (100) selon la revendication 1,
le matériau de chaque plaque thermo-conductrice (140a, 140b) comprenant de l'acier inoxydable.

8. Dispositif de batterie (100) selon la revendication 1,
l'épaisseur (T2) de chacune des plaques thermo-conductrices (140a, 140b) étant comprise dans la plage allant de 0,05 mm à 0,2 mm.

9. Dispositif de batterie (100) selon la revendication 1, comprenant en outre :
deux couches d'impression agencées respectivement sur les plaques thermo-conductrices (140a, 140b) afin de couvrir les plaques thermo-conductrices (140a, 140b).
